# EUROPEAN PATENT SPECIFICATION

(11) **EP 1 291 162 B1**
(45) Date of publication and mention of the grant of the patent: **04.06.2008**
(21) Application number: 02078623.2
(22) Date of filing: 04.09.2002
(51) Int. Cl.: B31B 1/84, B31B 3/28, B65B 55/10, B65B 55/24

(54) **Packaging machine**
Verpackungsvorrichtung
Dispositif d'emballage

(30) Priority: 07.09.2001 JP 2001271508
(43) Date of publication of application: 12.03.2003
(73) Proprietor: Shikoku Kakoki Co., Ltd., Itano-gun, Tokushima 771-0287 (JP)
(72) Inventor: Kitajima, Hiroshi c/o Shikoku Kakoki Co., Ltd., Itano-gun, Tokushima 771-0287 (JP); Ueda, Michio c/o Shikoku Kakoki Co., Ltd., Itano-gun, Tokushima 771-0287 (JP); Abe, Kazuo c/o Shikoku Kakoki Co., Ltd., Itano-gun, Tokushima 771-0287 (JP)
(74) Representative: Dorna, Peter

(56) References cited:
- DE-A- 3 108 912
- US-A- 4 788 811
- US-A- 5 857 309

## Description

### BACKGROUND OF THE INVENTION

The present invention relates to packaging machines for producing containers having a plug and filled with a liquid such as milk, and more particularly to a packaging machine adapted for a highly aseptic filling operation.

As disclosed, for example, in the publication JP-A 62-90231(1987) or in US 4 788 811, packaging machines of the type mentioned are known which comprise a plug attaching device for attaching a plug to an edge portion defining a liquid outlet in a top forming portion of a tubular container, a container bottom forming device for folding flat a bottom portion of the tubular container having the plug attached thereto to close the bottom portion, and a container sterilizing device for sterilizing the container having the plug and the closed bottom portion.

When the container is sterilized by the sterilizing device of the conventional packaging machine, the container is closed at its bottom. Accordingly difficulty is encountered in applying the sterilizing agent to the entire container uniformly, and the container can be not sterilized completely in its entirety.

Further it is general practice to sterilize containers and plugs before they are supplied to the packaging machine, whereas it is likely that some containers or plugs will be contaminated secondarily while being transported to the sterilizing device.

Moreover, plugs have a slit, milled edge, cavity and the like and is complex in shape. For example, the portion of complex shape will not be sterilized as effectively as flat portions, whereas conventional packaging machines have no means or expedient to cope with this problem.

Although a clearance will occur at the seal joint between the container and the plug, it is difficult to completely sterilize the microorganisms present in the clearance.

When attaching the plug to the container by sealing, paper particles will be released from around the liquid outlet, or resin particles will be produced owing to excessive thermal bonding. If the container is sterilized with such extraneous matter remaining thereon, the sterilizing agent can not be applied uniformly to the portion where the extraneous matter is deposited, hence uneven sterilization.

### SUMMARY OF THE INVENTION

An object of the present invention is to overcome the above problems and to provide a packaging machine which is adapted for a highly aseptic filling operation.

The present invention provides a packaging machine comprising a plug attaching device for attaching a plug to an edge portion defining a liquid outlet in a top forming portion of a tubular container, and a container bottom forming device for folding flat a bottom portion of the tubular container having the plug attached thereto to close the bottom portion, the packaging machine being characterized in that the plug attaching device is connected to the container bottom forming device by a transport path of a container transport device, a container sterilizing device being disposed at an intermediate portion of the transport path, the intermediate portion being between the plug attaching device and the container bottom forming device.

When the container is sterilized by the sterilizing device of the packaging machine of the invention, the container is in the form of a tube which is open at opposite ends thereof. This makes it possible to apply a sterilizing agent or the like to the entire container uniformly for the sterilization of the container in its entirety.

When the packaging machine comprises a plug feeder for supplying plugs to the plug attaching device, a container feeder for supplying containers to the plug attaching device, a clean booth surrounding the plug attaching device, the plug feeder and the container feeder, and a duct for connecting the clean booth to the container sterilizing device, it is unlikely that the container and the plug, which are sterilized and supplied to the packaging machine, will be contaminated secondarily while being transported to the container sterilizing device.

According to an embodiment, the plug is in the form of a tube having a flange at one end thereof. The plug attaching device comprises inserting means for inserting the plug through the liquid outlet from inside the container so that an end face of the flange opposite to the tube end is fitted to an inner surface of the outlet-defining edge portion, and sealing means for joining the flange end face to the inner surface of the outlet-defining edge portion. The plug feeder has an ultraviolet lamp for irradiating the plug with ultraviolet rays from the flange end face side. The plug can then be sterilized effectively even when having a complex configuration. Since the flange end face providing a seal is sterilized, microorganisms are prevented from ingressing into a clearance at the seal joint between the container and the plug.

When the container sterilizing device comprises a sterilizing chamber and a drying chamber each adapted to surround the transport path over a required length from an upstream position downstream, a hydrogen peroxide nozzle disposed within the sterilizing chamber and a hot air nozzle disposed within the drying chamber, hydrogen peroxide gas can be uniformly applied to the surface of the container in the form of a deposited condensate, and the deposit can be removed by drying with hot air within a short period of time.

When the packaging machine further comprises an extraneous matter removing device for removing particulate extraneous matter from the container having the plug attached thereto, before the container is brought into the sterilizing chamber, there is no likelihood that extraneous matter will adhere to the container when it is sterilized, consequently obviating uneven sterilization.

### BRIEF DESCRIPTION OF THE DRAWINGS

FIG. 1 is a side elevation of a packaging machine according to the invention;
FIG. 2 is a view in vertical cross section taken along the line II-II in FIG. 1;
FIG. 3 is a view in vertical cross section taken along the line III-III in FIG. 1;
FIG. 4 is a view in vertical cross section taken along the line IV-IV in FIG. 1;
FIG. 5 is a view in vertical cross section taken along the line V-V in FIG. 1; and
FIG. 6 is a perspective view showing a container and a plug for use with the packaging machine.

### DESCRIPTION OF THE PREFERRED EMBODIMENT

An embodiment of the present invention will be described below with reference to the drawings.

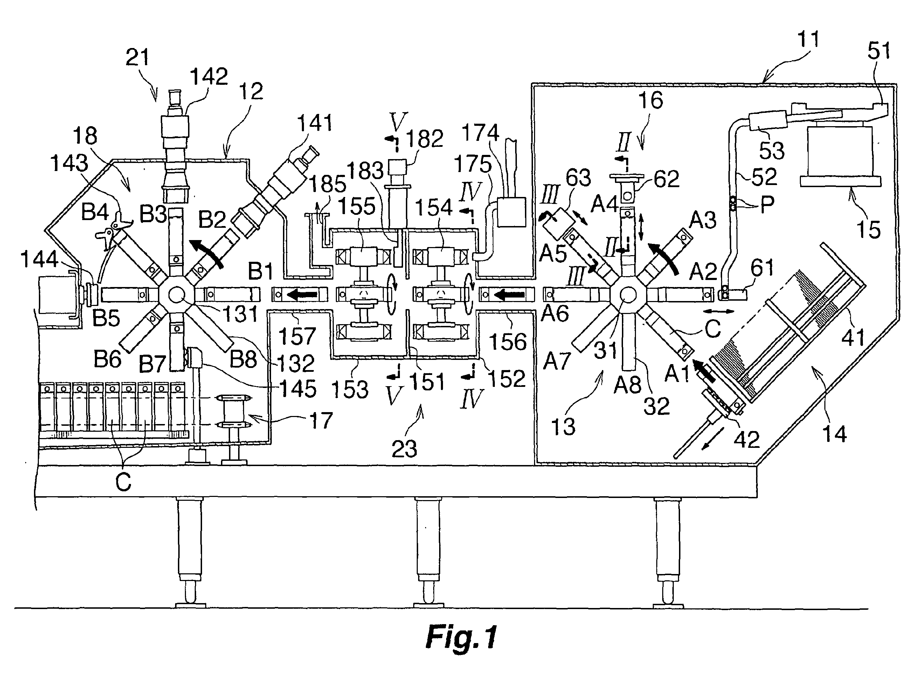

In the following description, the terms "front" and "rear" are based on FIG. 1; the left hand side of the drawing is referred to as the "front," and the opposite side thereof as the "rear." The terms "left" and "right" refer respectively to the left and right sides of the device as it is seen from behind forward.

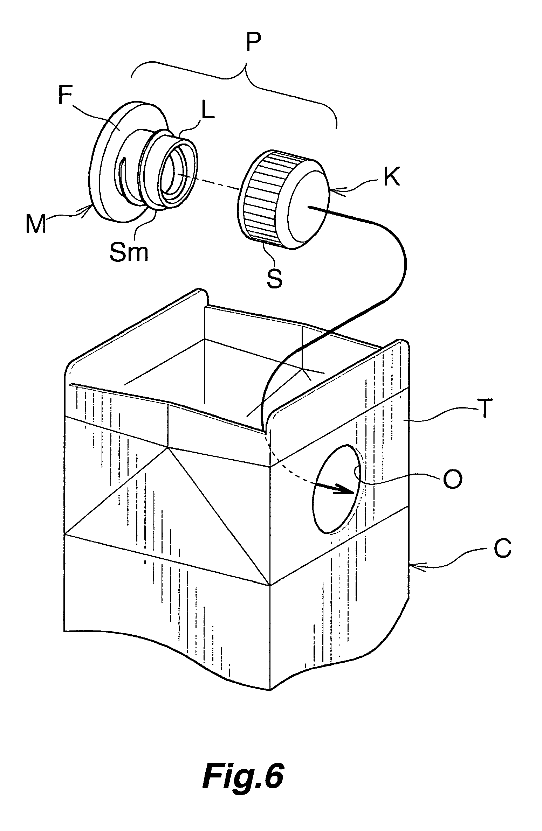

FIG. 6 shows in detail the container C and the plug P for use with the device embodying the invention.

The container C is made of a paper-base laminate having a polyethylene layer over each of its opposite surfaces and in the form of a tube having a bottom and rectangular to square in cross section. The container C has a circular liquid outlet O formed in the center of a rectangular top panel of a portion T for forming the top of the container.

The plug P comprises a plug body M and a cap K each molded integrally from a thermoplastic resin.

The plug body M comprises a cylindrical trunk wall L, and an annular flange F formed at one end of the wall. The trunk wall L has a male screw Sm formed on its outer surface.

The cap K has a skirt S so sized as to be insertable loosely through the outlet O. The skirt S is provided on its inner surface with a female screw (not shown) screwed on the male screw Sm.

The cap K as fitted around the trunk wall L is fitted into the outlet O from inside the container C, and the outer surface of the flange F which is seen in FIG. 6 is to be sealed to the inner surface of the container C around the outlet O.

FIG. 1 shows a packaging machine comprising a clean booth 11 and an aseptic chamber 12 which are arranged at a front position and a rear position as spaced apart, a rear rotor 13, container feeder 14, plug feeder 15 and plug attaching device 16 which are arranged within the clean booth 11, container conveyor 17 disposed within the aseptic chamber 12 and having a forwardly extending path of transport, front rotor 18 disposed above the rear end of the conveyor transport path, container bottom forming device 21 arranged around the front rotor 18, and container sterilizing device 23 interposed between the clean booth 11 and the aseptic chamber 12.

Although not shown, a group of devices for forming the top of each container and filling the container are arranged in succession from the rear forward along the conveyor transport path. These devices are a container top prefolder, filling device, container top full folder, container top heater and container top sealing device.

Clean air is supplied at all times to the clean booth 11 and the aseptic chamber 12 through a HEPA filter (not shown).

The rear rotor 13 comprises a horizontal rotation shaft 31, and eight mandrels 32 extending radially from the shaft. The shaft 31 is intermittently driven counterclockwise so that each mandrel 32 will be stopped at first to eighth stations A1 to A8 successively. The position where the mandrel 32 is halted as inclined rearward at an angle of 45 deg is the first station A1. The third, seventh and eighth stations A3, A7 and A8 are idle stations.

The container feeder 14 comprises a magazine 41 for placing therein containers C in layers as folded flat, and a suction member 42 for withdrawing each container C from the magazine 41 while opening the container to a tube of rectangular to square cross section and fitting the opened container C around the mandrel 32 as held stopped at the first station A1.

The container C as fitted around the mandrel 32 has the top forming portion T thereof projected from the mandrel 32 with its outlet O facing toward the left.

The plug feeder 15 comprises a hopper 51, and a chute 52 extending from the hopper 51 to a position on a phantom rearward extension line of the mandrel 32 as halted at the second station A2.

The plug P is transported through the chute 52 with the top of the cap K, i.e., the surface of the flange F, facing toward the left (toward the front orthogonal to the plane of FIG. 1).

An ultraviolet lamp 53 is provided at an intermediate portion of the chute 52 in the vicinity of the hopper 51. The lamp 53 is adapted to project ultraviolet rays from the left side of the chute 52 rightward toward the plug P being transported through the chute 52. The leftward surface of the plug P including the surface of the flange F is mainly sterilized with the irradiating ultraviolet rays.

The plug attaching device 16 comprises an insertion member 61 disposed at the second station A2, an ultrasonic sealing device 62 disposed at the fourth station A4, and an extraneous matter removing device 63 disposed at the fifth station A5.

Plugs P are taken out of the lower end of the chute 52 one by one by the insertion member 61, and the plug P taken out has the head of its cap K inserted from inside the container C through the outlet O thereof to fit the surface of the flange F to the inner surface of the container C around the outlet O.

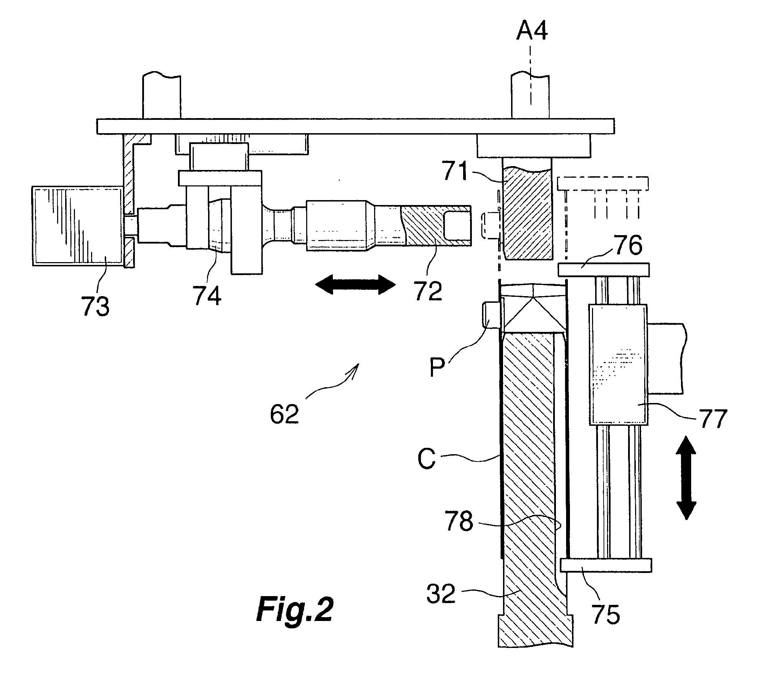

As shown in detail in FIG. 2, the ultrasonic sealing device 62 comprises an anvil 71 disposed on a phantom extension line of the mandrel 32 as halted at the fourth station A4, and a device body 74 having a horn 72 opposed to the left side face of the anvil 71 and movable leftward and rightward by a first hydraulic cylinder 73.

Outer and inner pushers 75, 76 are arranged also at the fourth station A4. The pushers 75, 76 are spaced apart by a distance slightly larger than the length of the container C, mounted on rods of a second hydraulic cylinder 77 and movable by the cylinder 77 along the right side face of the mandrel 32 longitudinally thereof. The mandrel 32 is provided in its right side face with a longitudinal groove 78 having fitted therein the forward end of the inner pusher 75.

Before sealing, the second hydraulic cylinder 77 is operated to move the inner and outer container pushers 75, 76 outward, causing the container C to be projected from the mandrel 32 and outwardly pushed by the inner pusher 75 to a position where the container is fitted around the anvil 71. For sealing, the first hydraulic cylinder 73 operates to press the rear face of the plug flange F against the anvil with the forward end of the horn 72, and in this state, the device body 74 produces ultrasonic waves. After sealing, the inner and outer pushers 75, 76 are moved inward, and the container C is pushed inward by the outer pusher 76 until the container is fitted around the mandrel 32 in the original state.

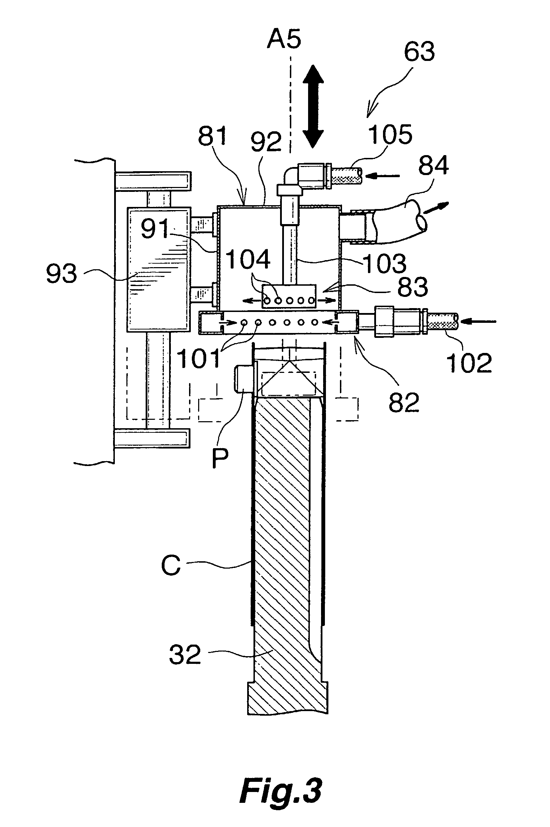

As shown in detail in FIG. 3, the extraneous matter removing device 63 comprises a scattering preventing cover 81 so disposed as to be movable toward or away from the top forming portion T of the container C fitted around the mandrel 32 as halted at the fifth station A5 and to be fitted over the top forming portion T when moved toward this portion T, an annular blowoff nozzle 82 useful for the container outer surface and attached to the cover 81 so as to surround the top forming portion T when the cover 81 is moved toward the portion T, a blowoff nozzle 83 useful for the container inner surface and attached to the cover 81 so as to fit into the top forming portion T when the cover 81 is moved toward the portion T, and a suction pipe 84 having a suction opening in communication with the cover 81.

The scattering preventing cover 81 is in the form of a tube having a closed end and an opening facing toward the outer end of the mandrel 32 as halted at the station A5. The cover 81 comprises a surrounding wall 91 having a quadrilateral cross section and a top wall 92, and is connected to the body of a rodless cylinder 93 and movable axially of the same mandrel 32.

The blowoff nozzle 82 for the exterior of the container is hollow, extends along the wall edge defining the opening of the cover 81 and has a multiplicity of inward orifices 101 formed in an inner peripheral wall thereof at a predetermined spacing. A first pipe 102 for supplying pressurized air is connected to the blowoff nozzle 82.

The blowoff nozzle 83 for the interior of the container is in the form of a flat plate attached to the lower end of an air pipe 103 extending through and suspended from the top wall 92 of the cover 81, and has a multiplicity of outward orifices 104 formed in an outer peripheral wall thereof at a predetermined spacing. A second pipe 105 for supplying pressurized air is connected to an upward projecting end of the air pipe 103.

When air is forced out of the nozzles 82, 83 with the cover 81 brought close to the container top forming portion T, paper particles, resin particles and like extraneous matter adhering to the inner and outer surfaces of this portion T are blown off. The extraneous matter blown off is prevented by the cover 81 from scattering in the interior of the clean booth 11 and collected through the suction pipe 84.

With reference to FIG. 1 again, the front rotor 18 has the same construction as the rear rotor 13 and comprises a horizontal rotation shaft 131 extending transversely of the machine and eight mandrels 132 extending radially from the shaft. The shaft 131 is intermittently driven counterclockwise so as to stop each mandrel 132 successively at first to eighth stations B1 to B8. The position where the mandrel 132 is halted as directed horizontally rearward is the first station B1. The sixth and eighth stations B6, B8 are idle stations.

The container bottom forming device 21 comprises a primary heater 141 disposed at the second station B2, a secondary heater 142 provided at the third station B3, a bottom folder 143 provided at the fourth station B4, a bottom bonding device 144 provided at the fifth station B5 and a container transfer device 145 provided at the seventh station B7.

The container sterilizing device 23 comprises a sterilizing chamber 152 and a drying chamber 153 which are adjacent to each other longitudinally of the machine as separated by a partition 151, a sterilizing turret 154 disposed within the sterilizing chamber 152 and a drying turret 155 disposed within the drying chamber 153.

The sterilizing chamber 152 is held in communication with the clean booth 11 by a rear duct 156. The drying chamber 153 is held in communication with the aseptic chamber 12 by a front duct 157. The rear duct 156 and the front duct 157 are each provided therein with a guide (not shown) for guiding the forward travel of containers.

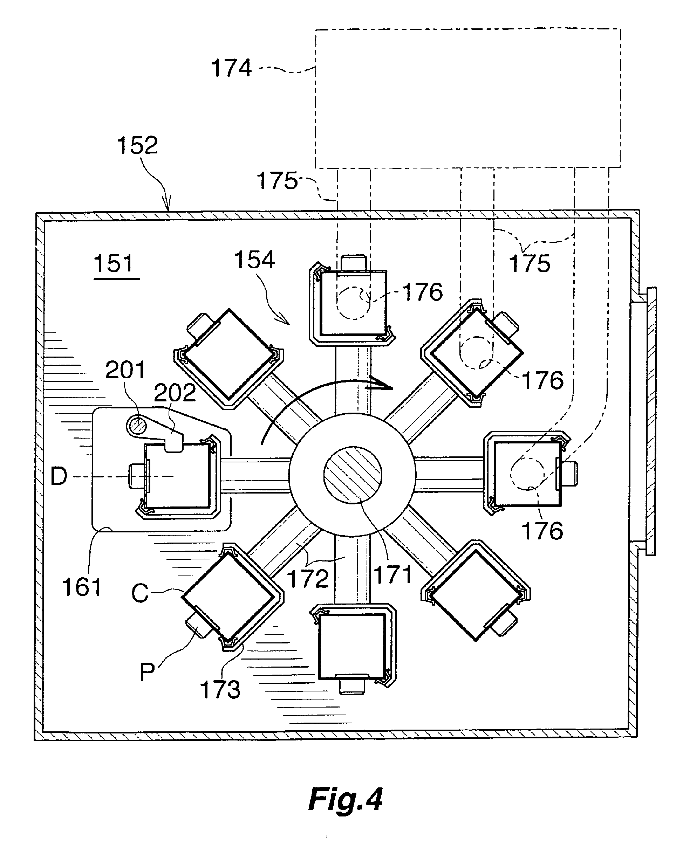

As shown in detail in FIG. 4, the partition 151 has a communication opening 161.

The sterilizing turret 154 comprises a horizontal rotation shaft 171 extending longitudinally of the machine, eight arms 172 extending radially from the shaft 171 and holders 173 each provided on the outer end of the arm 172 for holding the container C while rendering the container free to move horizontally forward or rearward.

The rotation shaft 171 is intermittently driven so that each holder 173 will be halted successively at the eight stations. Among the eight stations, the station where the arm 172 is stopped as directed leftward in a horizontal position is a transfer station D. The transfer station D is opposed to and positioned in the rear of the communication opening 161.

A gasifying chamber 174 is disposed in the rear of and obliquely above the sterilizing chamber 152. Three hydrogen peroxide gas nozzles 175 extend from the gasifying chamber 175 through the rear-end wall of the sterilizing chamber 152 and have outer end orifices 176 thereof opposed to the rear-end openings of containers C held by the holders 173 as halted at successive three stations respectively.

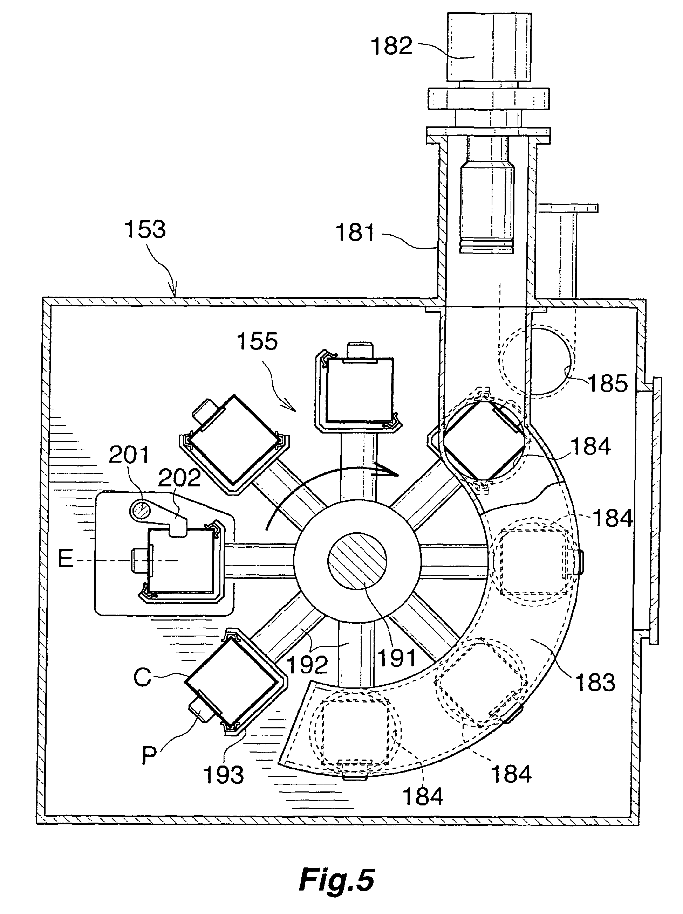

With reference to FIG. 5, a vertical hot air pipe 181 extends through a rear edge portion of top wall of the drying chamber 153. The hot air pipe 181 has an upper end provided with a hot air generator 182 and a lower end provided with a generally semicircular hot air nozzle 183. The nozzle 183 has four orifices 184 facing toward the front. A vent 185 is formed in the right upper corner of front-end wall of the drying chamber 153.

Like the sterilizing turret 154, the drying turret 155 comprises an intermittently drivable horizontal rotation shaft 191 extending longitudinally of the machine, and eight arms 192 and holders 193.

As in the interior of the sterilizing chamber 152, each holder 193 is stopped successively at eight stations including a transfer station E and four stations opposed to the respective orifices 184.

The five containers C to be described below are arranged in a row at a spacing along a straight line extending longitudinally of the machine and moved forward together a distance at a time by transport means. (FIGS. 4 and 5 show a rod 201 moveable forward and rearward and extending in the longitudinal direction, and pawls 202 mounted on the rod 201 and releasably engageable with the container.)

The five containers C are the first container C fitted around the mandrel 32 of the rear rotor 13 as halted at the sixth station A6, the second container C held by the guide within the rear duct 156, the third container C held by the holder 173 as halted at the transfer station D within the sterilizing chamber 152, the fourth container C held by the holder 193 as halted at the transfer station E within the drying chamber 153 and the fifth container C held by the guide within the front duct 157.

The first container C is released from the mandrel 32 and brought into the rear duct 156. The second container C is moved from the guide within the rear duct 156 to the holder 173 as halted at the transfer station D within the sterilizing chamber 152 and held by the holder 173. The third container C is moved between the holders 173, 193 as halted respectively at the transfer stations D, E in the sterilizing chamber 152 and the drying chamber 153. The fourth container C is moved from the holder 193 as halted at the transfer station E of the chamber 153 into the front duct 157. The fifth container C is moved out of the front duct 157 and fitted around the mandrel 132 of the front rotor 18 as halted at the first station B1.

The container C brought into the sterilizing chamber 152 is held by the holder 173 halted at the transfer station D. When brought to the location of the orifices 176 of the three hydrogen peroxide gas nozzles 175 while being revolved one turn along with the holder 173, the gas forced out of the orifices 176 is condensed by contact with the container surface and deposited thereon in the form of an aqueous hydrogen peroxide solution.

The container C wet with the solution is transferred from the sterilizing chamber 152 to the drying chamber 153 and held by the holder 193 as halted at the transfer station E within the chamber 153. During one revolution of the container C with the holder 193, the hydrogen peroxide solution on the container C is removed by drying.

The container C sterilized by the procedure described and fitted around the mandrel 132 of the front rotor 18 halted at the first station B1 has its bottom forming portion folded flat and closed and made into a bottomed tubular container C by the bottom forming device 21.

The bottomed container C is transferred from the mandrel 132 to the conveyor 17 by the transfer device 145. While being transported by the conveyor 17, the top forming portion is folded into the shape of a gabled roof and closed by the group of devices for forming the container top and filling the container.

The means described for sterilizing the container is not limitative; for example, ultraviolet rays may be used in combination with the described means.

The means for sterilizing the plug is not limited to the foregoing example; for example, a sterilizing agent may be used singly or in combination with the described means.

Further the sealing means for the plug is not limited to ultrasonic waves.

## Claims

1. A packaging machine comprising a plug attaching device (16) for attaching a plug (P) to an edge portion defining a liquid outlet (O) in a top forming portion of a tubular container (C), and a container bottom forming device (21) for folding flat a bottom portion of the tubular container having the plug attached thereto to close the bottom portion,
the packaging machine being **characterized in that** the plug attaching device is connected to the container bottom forming device by a transport path of a container transport device, a container sterilizing device (23) being disposed at an intermediate portion of the transport path, the intermediate portion being between the plug attaching device and the container bottom forming device.

2. A packaging machine according to claim 1 which comprises a plug feeder for supplying plugs to the plug attaching device, a container feeder for supplying containers to the plug attaching device, a clean booth surrounding the plug attaching device, the plug feeder and the container feeder, and a duct for connecting the clean booth to the container sterilizing device.

3. A packaging machine according to claim 2 wherein the plug is in the form of a tube having a flange at one end thereof,
the plug attaching device comprising inserting means for inserting the plug through the liquid outlet from inside the container so that an end face of the flange opposite to the tube end is fitted to an inner surface of the outlet-defining edge portion, and sealing means for joining the flange end face to the inner surface of the outlet-defining edge portion,
the plug feeder having an ultraviolet lamp for irradiating the plug with ultraviolet rays from the flange end face side.

4. A packaging machine according to any one of claims 1 to 3 wherein the container sterilizing device comprises a sterilizing chamber and a drying chamber each adapted to surround the transport path over a required length from an upstream position downstream, a hydrogen peroxide nozzle disposed within the sterilizing chamber and a hot air nozzle disposed within the drying chamber.

## Patentansprüche

1. Eine Packmaschine, die eine Vorrichtung (16) zum Anbringen von Verschlüssen, um einen Verschluss (P) an einem Kantenbereich, der einen Flüssigkeitsauslass (O) definiert, in einem Deckel bildenden Bereich eines rohrförmigen Behälters (C) anzubringen, und eine Vorrichtung (21) zum Bilden eines Behälterbodens, um einen Bodenbereich des rohrförmigen Behälters, an dem der Verschluss angebracht ist, flach zu falten, um den Bodenbereich zu verschließen, umfasst,
wobei die Packmaschine **dadurch gekennzeichnet ist, dass** die Vorrichtung zum Anbringen von Verschlüssen mit der Vorrichtung zum Bilden eines Behälterbodens über einen Transportpfad einer Behältertransportvorrichtung verbunden ist und eine Behältersterilisationsvorrichtung (23) in einem Zwischenbereich des Transportpfads vorgesehen ist, wobei sich der Zwischenbereich zwischen der Vorrichtung zum Anbringen von Verschlüssen und der Vorrichtung zum Bilden eines Behälterbodens befindet.

2. Packmaschine gemäß Anspruch 1, die eine Verschlusszuführvorrichtung, um Verschlüsse der Vorrichtung zum Anbringen von Verschlüssen zuzuführen, eine Behälterzuführvorrichtung, um Behälter der Vorrichtung zum Anbringen von Verschlüssen zuzuführen, eine Reinraumkabine, welche die Vorrichtung zum Anbringen von Verschlüssen, die Verschlusszuführvorrichtung und die Behälterzuführvorrichtung umgibt, und eine Rohrleitung für die Verbindung der Reinraumkabine mit der Behältersterilisationsvorrichtung umfasst.

3. Eine Packmaschine gemäß Anspruch 2, bei welcher der Verschluss in der Form eines Rohres mit einem Flansch an einem Ende davon ausgeführt ist, und
die Vorrichtung zum Anbringen von Verschlüssen Einsetzmittel für das Einsetzen des Verschlusses durch den Flüssigkeitsauslass von der Innenseite des Behälters, so dass die Stirnfläche des Flansches, die dem Rohrende gegenüberliegt, an einer inneren Oberfläche des Auslass definierenden Kantenbereichs anliegt, und Versiegelungsmittel, um die Stirnfläche des Flansches mit der inneren Oberfläche des Kantenbereichs, der den Auslass definiert, zu verbinden, umfasst,
wobei die Verschlusszuführvorrichtung eine ultraviolette Lampe aufweist, um den Verschluss von der Seite der Stirnfläche des Flansches mit ultravioletten Strahlen zu bestrahlen.

4. Eine Packmaschine gemäß einem der vorhergehenden Ansprüche 1 bis 3, bei der die Behältersterilisationsvorrichtung eine Sterilisierkammer und eine Trockenkammer, die beide so ausgeführt sind, dass sie den Transportpfad von einer Position stromaufwärts über eine benötigte Länge in Richtung stromabwärts umgeben, eine Düse für Wasserstoffperoxid, die innerhalb der Sterilisationskammer angeordnet ist, und eine Heißluftdüse, die innerhalb der Trockenkammer angeordnet ist, umfasst.

## Revendications

1. Machine de conditionnement comprenant un dispositif de fixation de bouchon (16) pour fixer un bouchon (P) à une partie de bord définissant une sortie de liquide (O) dans une partie formant le dessus d'un contenant tubulaire (C) et un dispositif de formation du fond d'un contenant (21) pour plier à plat une partie de fond du contenant tubulaire auquel est fixé le bouchon de manière à fermer la partie de fond,
la machine de conditionnement étant **caractérisée en ce que** le dispositif de fixation de bouchon est relié au dispositif de formation du fond d'un contenant par un chemin de transport d'un dispositif de transport de contenant, un dispositif de stérilisation de contenant (23) étant disposé au niveau d'une partie intermédiaire du chemin de transport, la partie intermédiaire se situant entre le dispositif de fixation de bouchon et le dispositif de formation du fond d'un contenant.

2. Machine de conditionnement selon la revendication 1, qui comprend un dispositif d'alimentation en bouchon pour fournir des bouchons au dispositif de fixation de bouchon, un dispositif d'alimentation en contenant pour fournir des contenants au dispositif de fixation de bouchon, une salle blanche qui entoure le dispositif de fixation de bouchon, le dispositif d'alimentation en bouchon et le dispositif d'alimentation en contenant, et un conduit pour relier la salle blanche au dispositif de stérilisation de contenant.

3. Machine de conditionnement selon la revendication 2, dans laquelle le bouchon se présente sous la forme d'un tube ayant une bride au niveau d'une extrémité de celui-ci,
le dispositif de fixation de bouchon comprenant des moyens d'insertion pour insérer le bouchon à travers la sortie de liquide à partir de l'intérieur du contenant de telle sorte qu'une face d'extrémité de la bride opposée à l'extrémité de tube soit ajustée à une surface intérieure de la partie de bord qui définit la sortie, et des moyens de scellage pour réunir la face d'extrémité de la bride et la surface intérieure de la partie de bord qui définit la sortie,
le dispositif d'alimentation en bouchon étant doté d'une lampe à rayons ultraviolets destinée à irradier le bouchon avec des rayons ultraviolets à partir du côté de la face d'extrémité de la bride.

4. Machine de conditionnement selon l'une quelconque des revendications 1 à 3, dans laquelle le dispositif de stérilisation de contenant comprend une chambre de stérilisation et une chambre de séchage, chacune d'elles étant adaptée pour entourer le chemin de transport sur une longueur requise à partir d'une position en amont vers une position en aval, une buse de peroxyde d'hydrogène étant disposée à l'intérieur de la chambre de stérilisation et une buse d'air chaud étant disposée à l'intérieur de la chambre de séchage.
